# EUROPÄISCHE PATENTSCHRIFT

(11) **EP 2 619 892 B1**
(45) Veröffentlichungstag und Bekanntmachung des Hinweises auf die Patenterteilung: **04.03.2020**
(21) Anmeldenummer: 11748399.0
(22) Anmeldetag: 24.08.2011
(51) Int. Cl.: H02M 7/49, H02J 7/00

(54) **SYSTEME ZUM LADEN EINES ENERGIESPEICHERS UND VERFAHREN ZUM BETRIEB DER LADESYSTEME**
SYSTEMS FOR CHARGING AN ENERGY STORE, AND METHOD FOR OPERATING THE CHARGING SYSTEMS
SYSTÈMES POUR CHARGER UN ACCUMULATEUR D'ÉNERGIE ET PROCÉDÉ DE FONCTIONNEMENT DES SYSTÈMES DE CHARGE

(30) Priorität: 20.09.2010 DE 102010041075
(43) Veröffentlichungstag der Anmeldung: 31.07.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/064561
(87) Internationale Veröffentlichungsnummer: WO 2012/038175

(56) Entgegenhaltungen:
- EP-A1- 0 907 238
- EP-A2- 0 950 559
- FR-A3- 2 937 803
- US-A1- 2002 146 617
- LEON M TOLBERT ET AL: "Multilevel Converters for Large Electric Drives", IEEE TRANSACTIONS ON INDUSTRY APPLICATIONS, IEEE SERVICE CENTER, PISCATAWAY, NJ, US, Bd. 35, Nr. 1, 1. Februar 1999 (1999-02-01), XP011022532, ISSN: 0093-9994

## Beschreibung

Die Erfindung betrifft Systeme zum Laden eines Energiespeichers und Verfahren zum Betrieb der Ladesysteme.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027 857 A1 und DE 10 2010 027 861 A1 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert.
Die Druckschrift EP 0 907 238 A1 offenbart einen PWM-gesteuerten Leistungsumrichter für eine dreiphasige elektrische Maschine mit in Reihe geschalteten Batteriemodulen, welche über moduleigene Wechselrichter selektiv in die Energieversorgung einer Phase der elektrischen Maschine einbezogen werden können. Die elektrische Maschine ist zudem an einem Sternpunkt mit einer elektrischen Gleichspannungsquelle koppelbar, über die die Batteriemodule geladen werden können.

### Offenbarung der Erfindung

Die vorliegende Erfindung schafft ein System zum Laden mindestens einer Energiespeicherzelle in einem steuerbaren Energiespeicher, welcher der Steuerung und der elektrischen Energieversorgung einer n-phasigen elektrischen Maschine, mit n ≥ 2, dient. Dabei weist der steuerbare Energiespeicher n parallele Energieversorgungszweige auf, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energieversorgungszweige sind einerseits mit einer Bezugsschiene und andererseits mit jeweils einer Phase der elektrischen Maschine verbunden. In Abhängigkeit von Steuersignalen unterbrechen die Koppeleinheiten entweder den jeweiligen Energieversorgungszweig oder sie überbrücken die jeweils zugeordneten Energiespeicherzellen oder sie schalten die jeweils zugeordneten Energiespeicherzellen in den jeweiligen Energieversorgungszweig. Um das Laden von zumindest einer der Energiespeicherzellen zu ermöglichen, sind mindestens zwei Phasen der elektrischen Maschine über jeweils mindestens eine Freilaufdiode mit einem Pluspol einer Ladeeinrichtung und die Bezugsschiene mit einem Minuspol der Ladeeinrichtung verbindbar. Die Ladeeinrichtung kann dann eine Gleichspannung zur Ladung mindestens einer Energiespeicherzelle zur Verfügung stellen.

Die Erfindung schafft schließlich ein Verfahren zum Betrieb eines erfindungsgemäßen Ladesystems für eine n-phasige elektrische Maschine, mit n ≥ 2: Dabei werden mindestens zwei Phasen der elektrischen Maschine über jeweils mindestens eine Freilaufdiode mit dem Pluspol der Ladeeinrichtung und die Bezugsschiene mit dem Minuspol der Ladeeinrichtung verbunden. In einer Ladephase werden alle Koppeleinheiten derjenigen Energiespeichermodule, welche in einem Energieversorgungszweig von zu ladenden Energiespeicherzellen liegen, derart gesteuert, dass die jeweils zugeordneten Energiespeicherzellen überbrückt werden. Alle übrigen Koppeleinheiten werden derart gesteuert, dass die jeweiligen Energieversorgungszweige unterbrochen werden. In einer der Ladephase folgenden Freilaufphase werden dann alle Koppeleinheiten, welche zu ladenden Energiespeicherzellen zugeordnet sind, derart gesteuert, dass die zugeordneten Energiespeicherzellen in den jeweiligen Energieversorgungszweig geschaltet werden. Alle Koppeleinheiten, welche in dem Energieversorgungszweig von zu ladenden Energiespeicherzellen liegen, selbst aber keinen zu ladenden Energiespeicherzellen zugeordnet sind, werden derart gesteuert, dass die jeweils zugeordneten Energiespeicherzellen überbrückt werden, und alle übrigen Koppeleinheiten werden derart gesteuert, dass die jeweiligen Energieversorgungszweige unterbrochen werden.

### Vorteile der Erfindung

Die Erfindung basiert auf der Grundidee, die Koppeleinheiten einerseits und die Statorwicklungen der elektrischen Maschine andererseits für eine Ladefunktion mitzunutzen. Dies wird dadurch realisiert, dass die Koppeleinheiten und die Statorwicklungen in einer Ladephase analog zu einem Hochsetzsteller betrieben werden, wobei den Statorwicklungen Energie zugeführt und dort gespeichert wird, welche anschließend in einer Freilaufphase an die zu ladenden Energiespeicherzellen abgegeben wird. Dabei entsteht nur minimaler zusätzlicher Hardware-Aufwand für die notwendigen Freilaufdioden, was mit geringen Kosten und geringem Platzbedarf einhergeht.

Mit den erfindungsgemäßen Systemen und Verfahren ist sowohl die Ladung von Energiespeicherzellen eines einzelnen Energiespeichermoduls als auch die gleichzeitige Ladung von Energiespeicherzellen mehrerer Energiespeichermodule möglich. Im Fall einer mehrphasigen elektrischen Maschine können auch die Energiespeicherzellen von Energiespeichermodulen, welche in verschiedenen Energieversorgungszweigen liegen, gleichzeitig geladen werden.

Aufgabe der Ladeeinrichtung ist es lediglich, eine geeignete Gleichspannung zur Verfügung zu stellen. Insofern kann die Ladeeinrichtung auf verschiedenen Wegen realisiert sein. Sie kann z.B. als Netzladegerät ausgestaltet sein. Dabei ist es für die Anwendbarkeit der Erfindung auch unerheblich, ob das Netzladegerät ein- oder dreiphasig oder ob es galvanisch getrennt oder verbindend ausgestaltet ist. Umfasst die Ladeeinrichtung einen Gleichspannungswandler (DC/DC-Wandler) kann dieser aufgrund der zusätzlichen Anpassstufe, welche über die als Hochsetzsteller betriebenen Koppeleinheiten und Statorwicklungen geschaffen wird, auf eine feste Ausgangsspannung ausgelegt werden, was sich vorteilhaft auf dessen Wirkungsgrad, Bauraum und Kosten auswirkt.

Um die Erzeugung unerwünschter Momente in der elektrischen Maschine während des Ladebetriebs zu vermeiden, ist eine gleichmäßige Belastung der Phasen der elektrischen Maschine anzustreben. Daher ist es gemäß einer Ausführungsform der Erfindung vorgesehen, dass der Pluspol der Ladeeinrichtung über jeweils mindestens eine Freilaufdiode mit allen Phasen der elektrischen Maschine verbindbar ist. Auf diese Weise kann sehr schnell zwischen den bestromten Phasen der elektrischen Maschine gewechselt werden, wodurch eine gleichmäßige Belastung erreicht werden kann.

Alternativ oder zusätzlich können unerwünschte Momente während des Ladevorgangs dadurch vermieden werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Sind die Induktivitäten der Statorwicklungen der elektrischen Maschine nicht ausreichend, so kann zwischen die Ladeeinrichtung und die elektrische Maschine oder zwischen die Ladeeinrichtung und den steuerbaren Energiespeicher eine zusätzliche Ladeinduktivität geschaltet sein.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines erfindungsgemäßen Ladesystems in einer Ladephase und
- Fig. 2: das Ladesystem gemäß Fig. 1 in einer Freilaufphase.

### Ausführungsformen der Erfindung

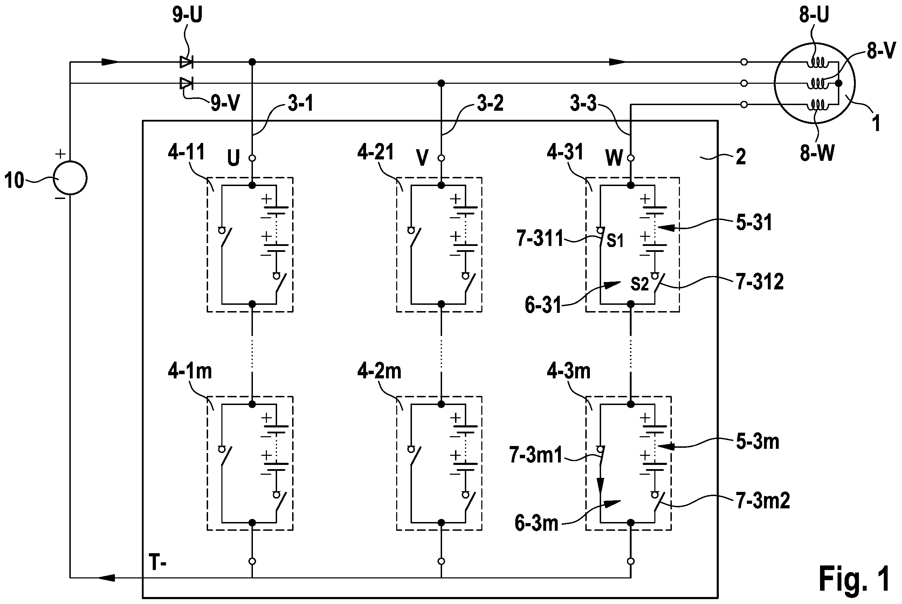

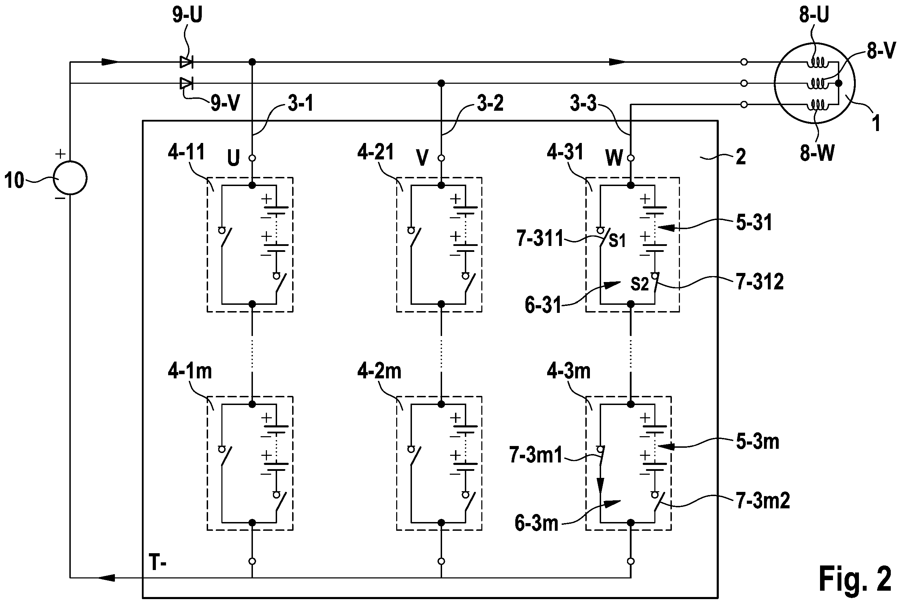

Die Figuren 1 und 2 zeigen eine schematische Darstellung eines erfindungsgemäßen Ladesystems. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in der dargestellten Ausführungsform ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In der dargestellten Ausführungsvariante werden die Koppeleinheiten 6 jeweils durch zwei steuerbare Schaltelemente 7-311 und 7-312 bis 7-3m1 und 7-3m2 gebildet. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Koppeleinheit 6 zu unterbrechen. Alternativ können die Energiespeicherzellen 5 durch Schließen jeweils eines der Schaltelemente 7 einer Koppeleinheit 6 entweder überbrückt werden, z.B. Schließen des Schalters 7-311 oder in den jeweiligen Energieversorgungszweig 3 geschaltet werden, z.B. Schließen des Schalters 7-312.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist im dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Unterbrechen des Energieversorgungszweiges, Überbrücken der Energieversorgungszellen und Schalten der Energieversorgungszellen in den Energieversorgungszweig) realisierbar sind. Beispielhafte alternative Ausgestaltungen einer Koppeleinheit ergeben sich aus den älteren Anmeldungen DE 10 2010 027 857 A1 und DE 10 2010 027 861 A1. Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

Um die Ladung von Energiespeicherzellen 5 eines oder mehrerer Energiespeichermodule 4 zu ermöglichen, werden die beiden Phasen U und V über jeweils eine Diode 9-U bzw. 9-V elektrisch mit einem Pluspol einer Ladeeinrichtung 10, welche in Form eines Ersatzschaltbildes als Gleichspannungsquelle dargestellt ist, verbunden. Die Ladeeinrichtung 10 stellt eine zum Laden der Energiespeicherzellen 5 geeignete Gleichspannung zur Verfügung und kann z.B. als Netzladegerät (ein- oder dreiphasig, galvanisch getrennt oder verbindend) ausgestaltet sein. Der Minuspol der Ladeeinrichtung 10 wird mit der Bezugsschiene T- verbunden.

Im Folgenden wird exemplarisch der Ladevorgang der Energiespeicherzellen 5 eines einzelnen Energiespeichermoduls 4, nämlich der Energiespeicherzellen 5-31 des Energiespeichermoduls 4-31 in dem Energieversorgungszweig 3-3 beschrieben.

Während einer Ladephase, welche in Fig. 1 dargestellt ist, werden die Koppeleinheiten 6-31 bis 6-3m der Energiespeichermodule 4-31 bis 4-3m, welche in dem Energieversorgungszweig 3-3 liegen, in welchem auch die zu ladenden Energiespeicherzellen 5-31 liegen, durch eine nicht dargestellte Steuereinheit derart gesteuert, dass die jeweils zugeordneten Energiespeicherzellen 5-31 bis 5-3m überbrückt werden. Dies wird konkret dadurch erreicht, dass die Schaltelemente 7-311 bis 7-3m1 geschlossen werden, wohingegen die Schaltelemente 7-312 bis 7-3m2 geöffnet werden. Alle übrigen Koppeleinheiten 6, das heißt alle Koppeleinheiten 6 in den Energiespeichermodulen 4 der anderen beiden Energieversorgungszweige 3-1 und 3-2 werden derart gesteuert, dass die jeweiligen Energieversorgungszweige 3-1 bzw. 3-2 unterbrochen werden. Konkret wird dies dadurch erreicht, dass jeweils beide Schaltelemente 7 der Koppeleinheiten 6 geöffnet werden.

Eine derartige Ansteuerung der Koppeleinheiten 6 bewirkt einen Stromfluss durch die Statorwicklungen 8, so dass während der Ladephase elektrische Energie in den Statorwicklungen 8 gespeichert wird.

In einer der Ladephase folgenden Freilaufphase, welche in Fig. 2 dargestellt ist, wird die Koppeleinheit 6-31, welche den zu ladenden Energiespeicherzellen 5-31 zugeordnet ist, derart gesteuert, dass die zugeordneten Energiespeicherzellen 5-31 in den Energieversorgungszweig 3-3 geschaltet werden. Dies wird konkret dadurch erreicht, dass das Schaltelement 7-312 geschlossen und das Schaltelement 7-311 geöffnet wird. Alle übrigen Koppeleinheiten 6-32 bis 6-3m, welche in dem Energieversorgungszweig 3-3 der zu ladenden Energiespeicherzellen 5-31 liegen, die selbst aber keinen zu ladenden Energiespeicherzellen 5 zugeordnet sind, werden derart gesteuert, dass die jeweils zugeordneten Energiespeicherzellen 5-32 bis 5-3m überbrückt werden (Schließen der Schaltelemente 7-321 bis 7-3m1 und Öffnen der Schaltelemente 7-322 bis 7-3m2). Die Koppeleinheiten 6-11 bis 6-1 m und 6-21 bis 6-2m in den übrigen Energieversorgungszweigen 3-1 und 3-2 werden weiterhin derart gesteuert, dass die jeweiligen Energieversorgungszweige 3-1 und 3-2 unterbrochen werden.

Eine derartige Steuerung der Koppeleinheiten 6 bewirkt eine elektrische Verbindung der Statorwicklungen 8 mit den zu ladenden Energiespeicherzellen 5-31. Die Induktivität der Statorwicklungen 8 treibt dabei den Strom weiter und lädt auf diese Weise die Energiespeicherzellen 5-31 auf.

Reichen die Motorinduktivitäten nicht aus, kann eine zusätzliche externe Ladeinduktivität eingesetzt werden, welche zwischen die Ladeeinrichtung 10 und die elektrische Maschine 1 oder zwischen die Ladeeinrichtung 10 und den steuerbaren Energiespeicher 2 geschaltet wird.

Um die Erzeugung unerwünschter Momente in der elektrischen Maschine während des Ladebetriebs zu vermeiden, ist eine gleichmäßige Belastung der Phasen der elektrischen Maschine 1 anzustreben. Daher ist es vorteilhaft auch die dritte Phase W über eine weitere nicht dargestellte Freilaufdiode mit dem Pluspol der Ladeeinrichtung 10 zu verbinden. Auf diese Weise kann sehr schnell zwischen den bestromten Phasen der elektrischen Maschine 1 gewechselt werden, wodurch eine gleichmäßige Belastung erreicht werden kann.

Alternativ oder zusätzlich können unerwünschte Momente während des Ladevorgangs dadurch vermieden werden, dass die elektrische Maschine 1 während des Ladevorgangs mechanisch blockiert wird, z.B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

## Patentansprüche

1. System zum Laden mindestens einer Energiespeicherzelle (5) in einem steuerbaren Energiespeicher (2), welcher der Steuerung und der elektrischen Energieversorgung einer n-phasigen elektrischen Maschine (1), mit n ≥ 2, dient, wobei
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbunden sind und
▪ andererseits mit jeweils einer Phase (U, V, W) der elektrischen Maschine (1) verbunden sind,
- die Koppeleinheiten (6) in Abhängigkeit von Steuersignalen den jeweiligen Energieversorgungszweig (3-1, 3-2; 3-3) unterbrechen oder die jeweils zugeordneten Energiespeicherzellen (5) überbrücken oder die jeweils zugeordneten Energiespeicherzellen (5) in den jeweiligen Energieversorgungszweig (3-1, 3-2; 3-3) schalten, und
- die Bezugsschiene (T-) mit einem Minuspol der Ladeeinrichtung (10) verbindbar ist,
- **dadurch gekennzeichnet, dass** mindestens zwei Phasen (U, V) der elektrischen Maschine (1) über jeweils mindestens eine Freilaufdiode (9-U, 9-V) mit einem Pluspol einer Ladeeinrichtung (10) verbindbar sind, welche eine Gleichspannung zur Ladung mindestens einer Energiespeicherzelle (5) zur Verfügung stellt.

2. System nach Anspruch 1, wobei alle Phasen (U, V, W) der elektrischen Maschine (1) über jeweils mindestens eine Freilaufdiode (9) mit dem Pluspol der Ladeeinrichtung (10) verbindbar sind.

3. System nach einem der Ansprüche 1 bis 2, wobei zwischen die Ladeeinrichtung (10) und die elektrische Maschine (1) oder zwischen die Ladeeinrichtung (10) und den steuerbaren Energiespeicher (2) eine zusätzliche Ladeinduktivität geschaltet ist.

4. Verfahren zum Betrieb eines Ladesystems gemäß einem der Ansprüche 1 bis 3, **dadurch gekennzeichnet, dass**
- mindestens zwei Phasen (U, V) der n-phasigen elektrischen Maschine (1), mit n ≥ 2, über jeweils mindestens eine Freilaufdiode (9-U, 9-V) mit dem Pluspol der Ladeeinrichtung (10) und die Bezugsschiene (T-) mit dem Minuspol der Ladeeinrichtung (10) verbunden werden,
- in einer Ladephase
▪ alle Koppeleinheiten (6-31 bis 6-3m) derjenigen Energiespeichermodule (4-31 bis 4-3m), welche in einem Energieversorgungszweig (3-3) von zu ladenden Energiespeicherzellen (5-31) liegen, derart gesteuert werden, dass die jeweils zugeordneten Energiespeicherzellen (5-31 bis 5-3m) überbrückt werden, und
▪ alle übrigen Koppeleinheiten (6) derart gesteuert werden, dass die jeweiligen Energieversorgungszweige (3-1, 3-2) unterbrochen werden, und
- in einer der Ladephase folgenden Freilaufphase
▪ alle Koppeleinheiten (6-31), welche zu ladenden Energiespeicherzellen (5-31) zugeordnet sind, derart gesteuert werden, dass die zugeordneten Energiespeicherzellen (5-31) in den jeweiligen Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) überbrückt werden, und
▪ alle übrigen Koppeleinheiten (6) derart gesteuert werden, dass die jeweiligen Energieversorgungszweige (3-1, 3-2) unterbrochen werden.

## Claims

1. System for charging at least one energy storage cell (5) in a controllable energy store (2), which serves to control and supply electrical energy to an n-phase electric machine (1), where n ≥ 2, wherein
- the controllable energy store (2) has n parallel energy supply paths (3-1, 3-2, 3-3), which
• each have at least two energy storage modules (4) connected in series, which each comprise at least one electrical energy storage cell (5) with an associated controllable coupling unit (6),
• are firstly connected to a reference rail (T-) and
• secondly connected to a respective phase (U, V, W) of the electric machine (1),
- the coupling units (6) interrupt the respective energy supply path (3-1, 3-2; 3-3) or bypass the respectively associated energy storage cells (5) or connect the respectively associated energy storage cells (5) into the respective energy supply path (3-1, 3-2; 3-3) depending on control signals, and
- the reference rail (T-) is able to be connected to a negative pole of the charging device (10),
- **characterized in that** at least two phases (U, V) of the electric machine (1) are able to be connected to a positive pole of a charging device (10) via in each case at least one freewheeling diode (9-U, 9-V), which charging device provides a DC voltage for charging at least one energy storage cell (5).

2. System according to Claim 1, wherein all of the phases (U, V, W) of the electric machine (1) are able to be connected to the positive pole of the charging device (10) via in each case at least one freewheeling diode (9) .

3. System according to one of Claims 1 to 2, wherein an additional charging inductance is connected between the charging device (10) and the electric machine (1) or between the charging device (10) and the controllable energy store (2).

4. Method for operating a charging system according to one of Claims 1 to 3, **characterized in that**
- at least two phases (U, V) of the n-phase electric machine (1), where n ≥ 2, are connected to the positive pole of the charging device (10) via in each case at least one freewheeling diode (9-U, 9-V) and the reference rail (T-) is connected to the negative pole of the charging device (10),
- in a charging phase
• all of the coupling units (6-31 to 6-3m) of those energy storage modules (4-31 to 4-3m) located in an energy supply path (3-3) of energy storage cells (5-31) to be charged are controlled in such a way that the respectively associated energy storage cells (5-31 to 5-3m) are bypassed, and
• all of the remaining coupling units (6) are controlled in such a way that the respective energy supply paths (3-1, 3-2) are interrupted, and
- in a freewheeling phase that follows the charging phase
• all of the coupling units (6-31) associated with energy storage cells (5-31) to be charged are controlled in such a way that the associated energy storage cells (5-31) are connected into the respective energy supply path (3-3),
• all of the coupling units (6-32 to 6-3m) located in the energy supply path (3-3) of energy storage cells (5-31) to be charged but are themselves not associated with energy storage cells (5) to be charged are controlled in such a way that the respectively associated energy storage cells (5-32 to 5-3m) are bypassed, and
• all of the remaining coupling units (6) are controlled in such a way that the respective energy supply paths (3-1, 3-2) are interrupted.

## Revendications

1. Système pour charger au moins un élément accumulateur d'énergie (5) dans un accumulateur d'énergie (2) contrôlable, qui permet la commande et l'alimentation en énergie électrique d'une machine électrique n-phasée (1), avec n ≥ 2, dans lequel
- l'accumulateur d'énergie (2) contrôlable comporte n branches d'alimentation en énergie (3-1, 3-2, 3-3) parallèles
• qui comportent respectivement au moins deux modules accumulateurs d'énergie (4) montés en série comprenant respectivement au moins un élément accumulateur d'énergie électrique (5) doté d'une unité de couplage (6) contrôlable associée,
• qui sont reliées, d'une part, à un rail de référence (T-) et
• d'autre part respectivement à une phase (U, V, W) de la machine électrique (1),
- en fonction de signaux de commande, les unités de couplage (6) interrompent la branche d'alimentation en énergie (3-1, 3-2 ; 3-3) respective ou assurent le pontage des éléments accumulateurs d'énergie (5) respectivement associés ou connectent des éléments accumulateurs d'énergie (5) respectifs associés dans la branche d'alimentation en énergie (3-1, 3-2 ; 3-3) respective, et
- le rail de référence (T-) peut être relié à un pôle négatif du dispositif de charge (10),
- **caractérisé en ce qu'**au moins deux phases (U, V) de la machine électrique (1) peuvent être reliées à un pôle positif d'un dispositif de charge (10) par l'intermédiaire d'au moins une diode de roue libre (9-U, 9-V), lequel dispositif de charge fournit une tension continue pour la charge d'au moins un élément accumulateur d'énergie (5).

2. Système selon la revendication 1, dans lequel toutes les phases (U, V, W) de la machine électrique (1) peuvent être reliées au pôle positif du dispositif de charge (10) par l'intermédiaire d'au moins une diode de roue libre (9).

3. Système selon l'une des revendications 1 à 2, dans lequel une inductance de charge supplémentaire est connectée entre le dispositif de charge (10) et la machine électrique (1) ou entre le dispositif de charge (10) et l'accumulateur d'énergie (2) contrôlable.

4. Procédé de fonctionnement d'un système de charge selon l'une des revendications 1 à 3, **caractérisé en ce que**
- au moins deux phases (U, V) de la machine électrique n-phasée (1), avec n ≥ 2, sont respectivement reliées au pôle positif du dispositif de charge (10) par l'intermédiaire d'au moins une diode de roue libre (9-U, 9-V) et le rail de référence (T-) est relié au pôle négatif du dispositif de charge (10),
- lors d'une phase de charge,
• toutes les unités de couplage (6-31 à 6-3m) des modules accumulateurs d'énergie (4-31 à 4-3m) qui se trouvent dans une branche d'alimentation en énergie (3-3) d'éléments accumulateurs d'énergie (5-31) à charger sont commandées de manière à assurer le pontage des éléments accumulateurs d'énergie (5-31 à 5-3m) respectivement associés, et
• toutes les autres unités de couplage (6) sont commandées de manière à interrompre les branches d'alimentation en énergie (3-1, 3-2) respectives, et
- lors d'une phase de roue libre faisant suite à la phase de charge,
• toutes les unités de couplage (6-31) qui sont associées à des accumulateurs d'énergie (5-31) à charger sont commandées de manière à connecter les accumulateurs d'énergie (5-31) associés dans la branche d'alimentation en énergie (3-3) respective,
• toutes les unités de couplage (6-32 à 6-3m) qui se trouvent dans la branche d'alimentation en énergie (3-3) d'éléments accumulateurs d'énergie (5-31) à charger mais qui ne sont pas elles-mêmes associées à des éléments accumulateurs d'énergie (5) à charger, sont commandées de manière à assurer le pontage des éléments accumulateurs d'énergie (5-32 à 5-3m) respectivement associés, et
• toutes les autres unités de couplage (6) sont commandées de manière à interrompre les branches d'alimentation en énergie (3-1, 3-2) respectives.
